# EUROPEAN PATENT APPLICATION

(11) **EP 1 491 435 A2**
(43) Date of publication of application: **29.12.2004**
(21) Application number: 03018008.7
(22) Date of filing: 07.08.2003
(51) Int. Cl.: B62K 3/00, B62K 21/00

(54) **Cambering vehicle having inclined pivot axle**

(30) Priority: 23.06.2003 US 608398; 23.06.2003 US 608399
(71) Applicant: UNIQUE FORCES COMPANY LIMITED, Tortola (VG)
(72) Inventor: Chuang, Jin Chen, Taichung, Taiwan 420 (TW)
(74) Representative: Casalonga, Axel

(57) **Abstract**

A cambering vehicle includes a front column (2), a left and a right trailing arms (40) each having a front portion pivotally attached to the front column (2) with a pivot axle (78) which is inclined relative to the front column (2). A bracket (7) is rotatably attached to the front column (2) to support the pivot axles (78). A latch device (23) may detachably latch the bracket (7) and the trailing arms (40) to the front column (2). The bracket (7) and the trailing arms (40) may be rotated relative to the front column (2) to a folding position when the latch device (23) releases the bracket (7) relative to the front column (2).

## Description

The invention relates to a cambering vehicle having an inclined pivot axle.

US Pat No. 4,123,079 to Biskup, US Pat No. 4,133,551 to Biskup, US Pat No. 6,220,612 to Beleski, Jr., US Pat No. 6,467,986 to Feng, and US Pat No. 6,517,093 to Feng, disclose five typical cambering vehicles.

However, the typical cambering vehicles all include a pair of trailing arms pivotally secured to a front tube with a pivot axle that is perpendicular to the front tube. In addition, the cambering vehicle may not be easily folded to a compact configuration.

The objective of the invention is to provide a cambering vehicle including an inclined pivot axle.

The other objective of the invention is to provide a cambering vehicle including a foldable structure.
FIG. 1 is a perspective view of a cambering vehicle;
FIGS. 2, 3 are partial exploded views of the cambering vehicle;
FIG. 4 is a side view of the cambering vehicle;
FIG. 5 is a top view of the cambering vehicle;
FIG. 6 is a front view of the cambering vehicle;
FIGS. 7, 8 are enlarged partial side views;
FIG. 9 is a front view of a bracket of the cambering vehicle;
FIGS. 10, 11 are enlarged partial side views;
FIG. 12 is a front view showing another bracket of the vehicle;
FIG. 13 is a perspective view showing another application of the cambering vehicle; and

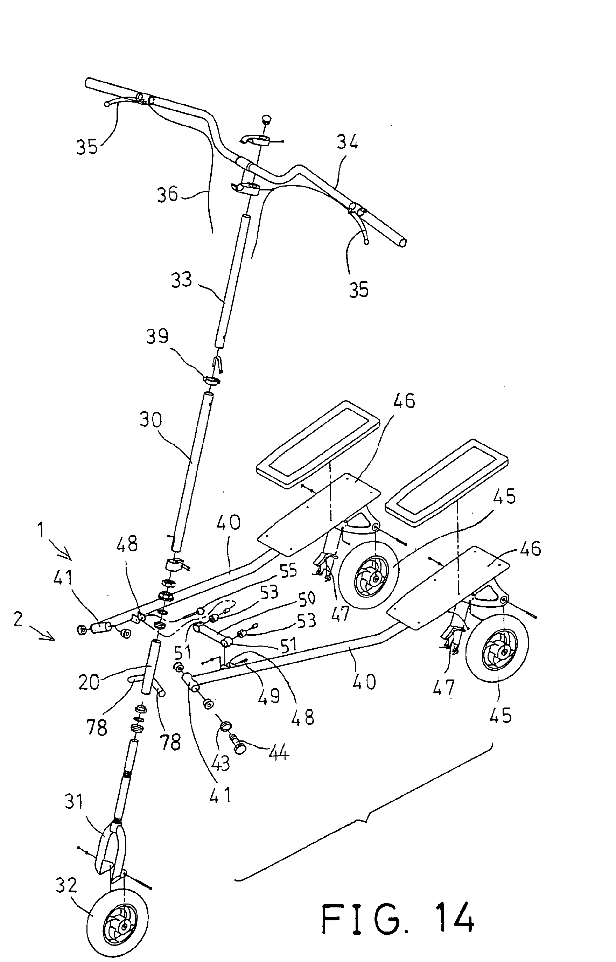

FIG. 14 is a partial exploded view of the cambering vehicle as shown in FIG. 13.

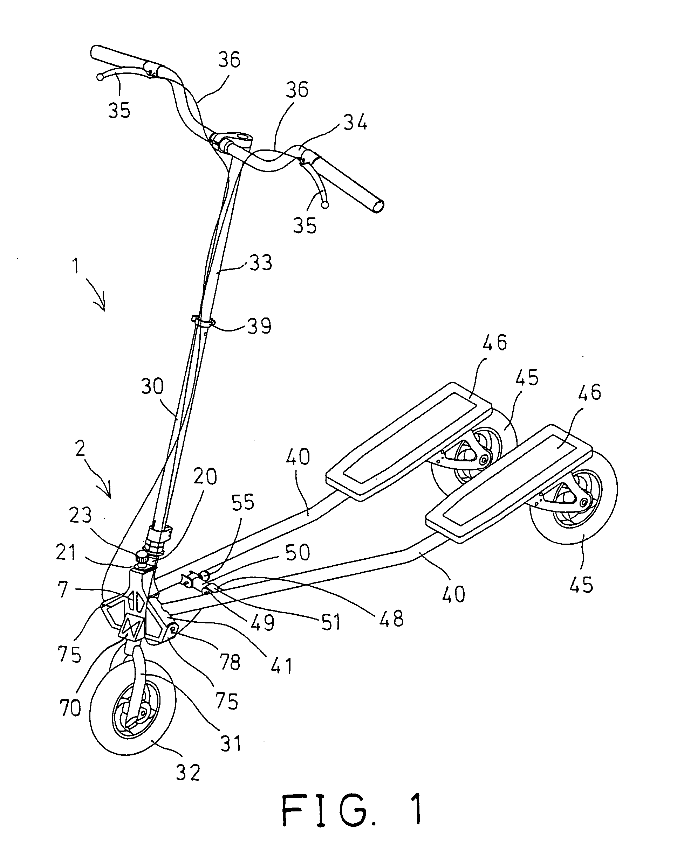

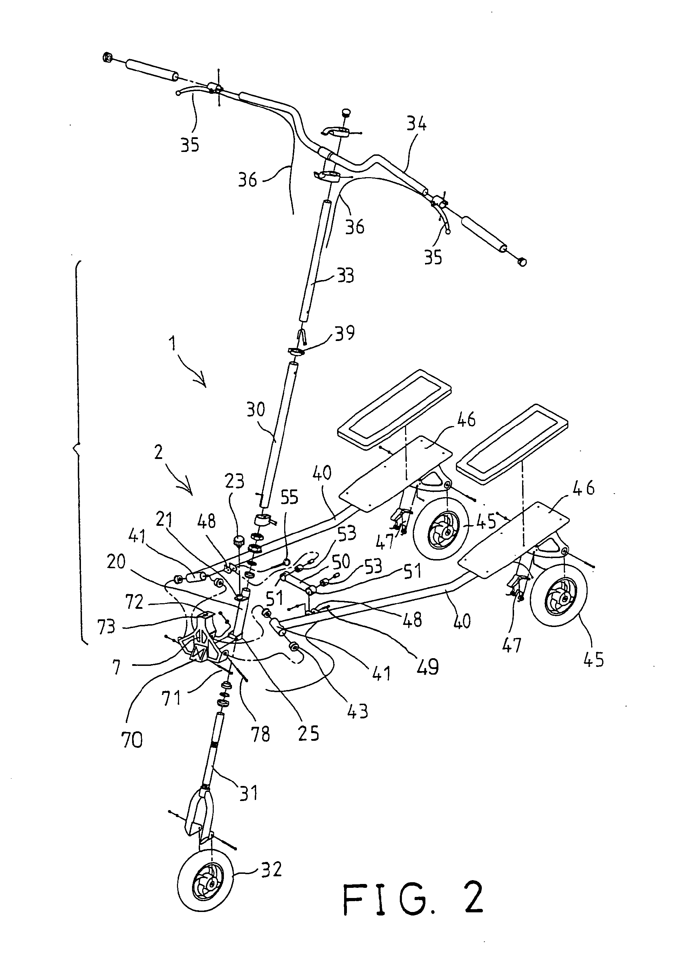

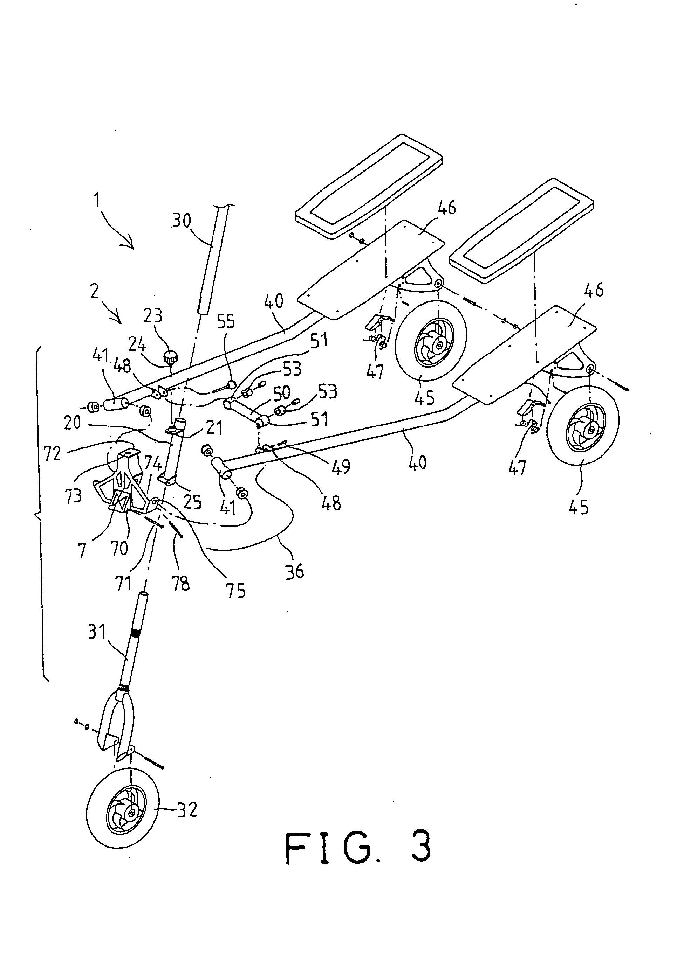

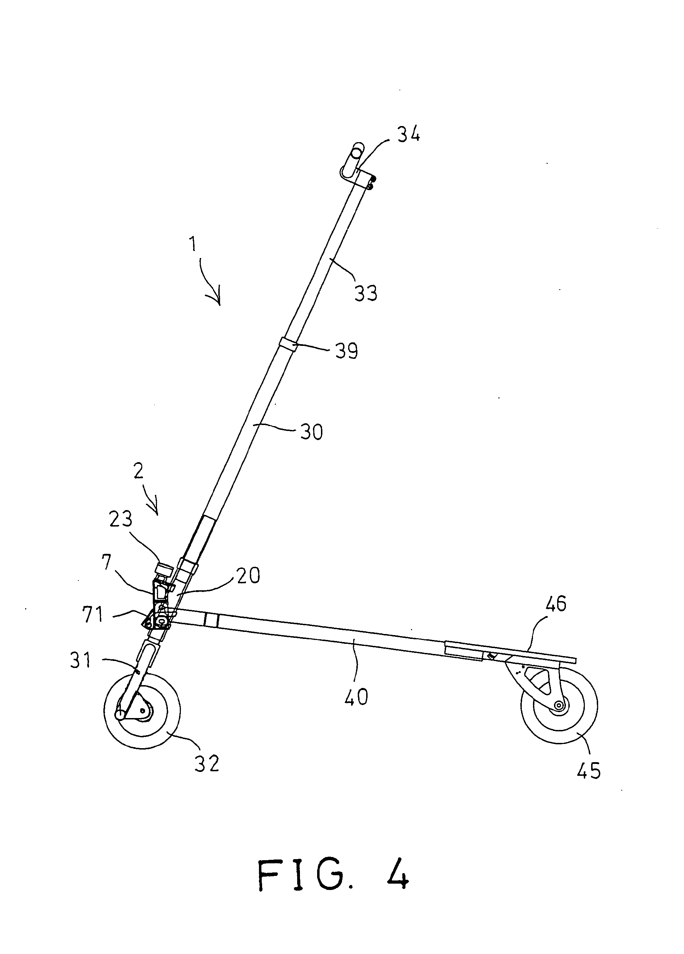

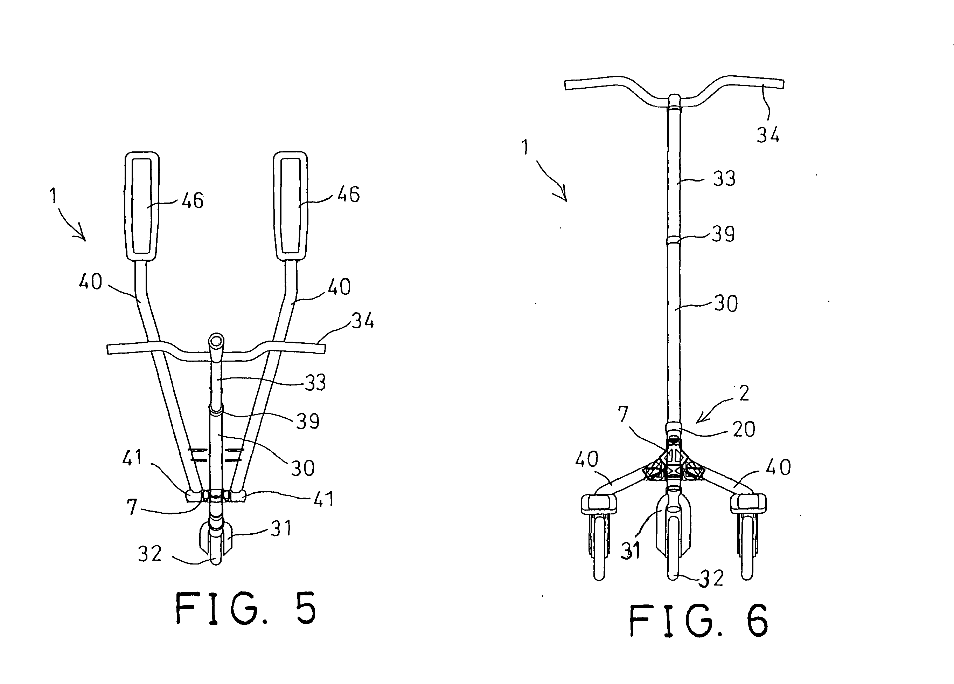

Referring to FIGS. 1-6, a cambering vehicle 1 comprises a front column 2 including a front tube 20, a steering shaft 30 rotatably disposed concentrically within the front tube 20, a front fork 31 attached to bottom of the shaft 30 to support a front wheel 32, and a handle 34 supported on top of the shaft 30. The shaft 30 may further include a retractable stem 33 adjustably secured to the shaft 30 with such as a quick release clamp 39. The handle 34 is secured on top of the shaft 30 or the stem 33. One or more, such as two brake hand grips 35 are attached to the handle 34 and coupled to cables 36.

The front column 2 includes an extension 21 attached to the upper portion 22 of the front tube 20. A spring-biased latch device 23 is attached to the extension 21 of the front tube 20, and includes a latch pin 24 extendible through the extension 21 of the front tube 20, and extendible downwardly toward the lower portion 25 of the front tube 20.

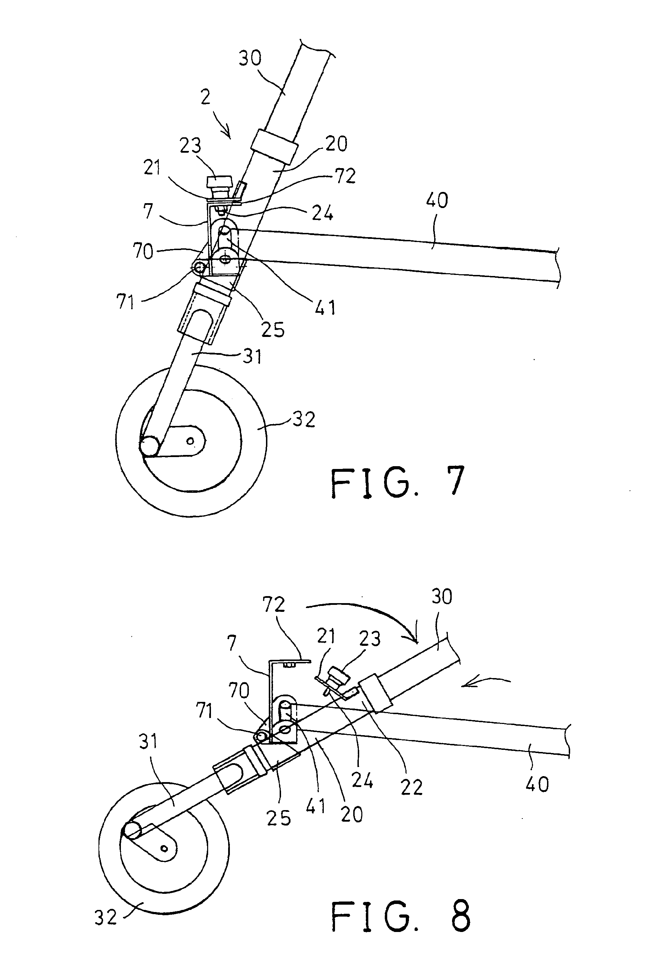

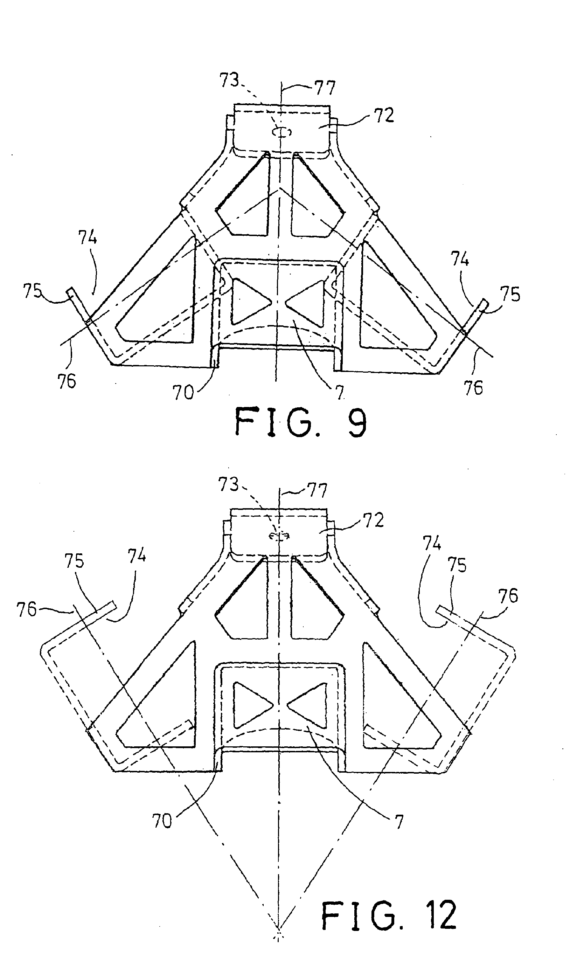

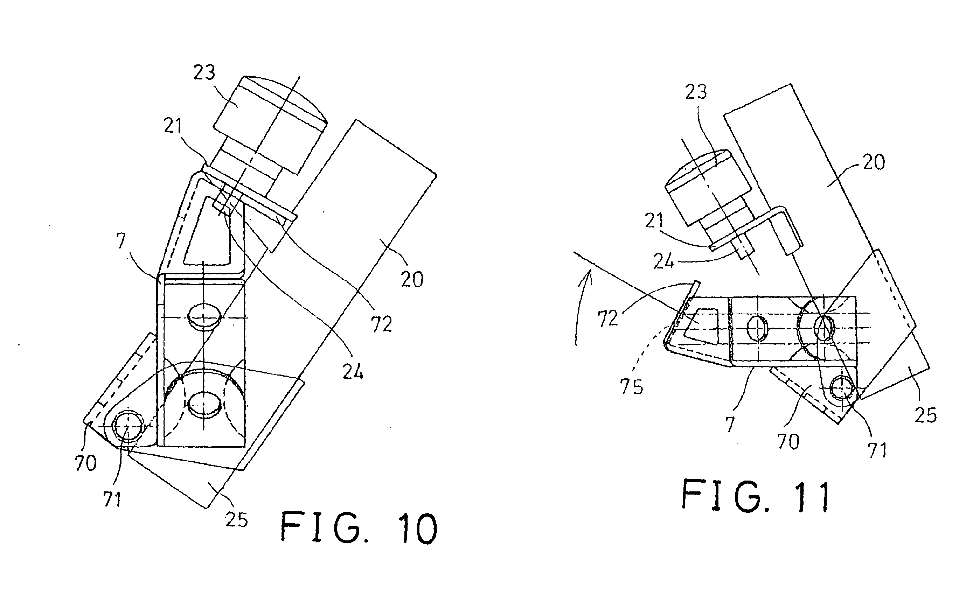

A bracket 7 includes a lower portion 70 pivotally attached to the lower portion 25 of the front tube 20 with a pivot shaft 71 (FIGS. 7-8, 10-11), an upper panel 72 having an orifice 73 for receiving the latch pin 24 of the latch device 23 which may openably secure the upper panel 72 to the front tube 20. The bracket 7 includes two socket openings 74 formed by two frames 75, and each having a pivotal axis 76 inclined relative to the longitudinal axis 77 of the bracket 7 (FIG. 9) that is parallel to the front tube 20, such that the socket openings 74 and/or the frames 75 are also inclined relative to the front tube 20 (FIGS. 1, 4, 6, 7).

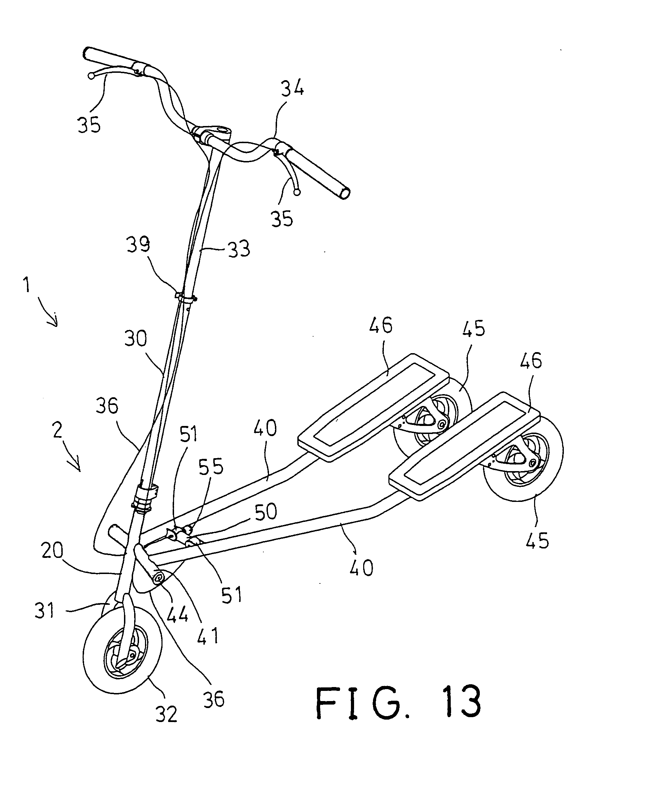

The pivotal axes 76 of the socket openings 74 and/or the frames 75 are shown in FIG. 9 to be inclined downwardly relative to the bracket 7. However, the pivotal axes 76 of the socket openings 74 and/or the frames 75 may also be inclined relative to the bracket 7 in different directions, such as inclined upwardly relative to the bracket 7 as shown in FIG. 12.

A left and a right trailing arms 40 each includes a front portion 41 or a bushing 41 rotatably or pivotally attached to the bracket 7 with pivot axles 78 that are secured to the frames 75 of the bracket 7 with bearings 43, to foldably couple the trailing arms 40 to the front tube 20 with the bracket 7. Each of the trailing arms 40 includes a rear wheel 45 rotatably attached to the rear end, and a foot pedal 46 to support users. The bushings 41 of the trailing arms 40 merge the pivotal axes 76 of the socket openings 74 and/or the frames 75, such that the bushings 41 are also inclined relative to the longitudinal axis 77 of the bracket 7 that is parallel to the front tube 20.

One or more brake devices 47 may be attached to the rear portions of the trailing arms 40 and opereated by the brake hand grips 35 and the cables 36 for braking the rear wheels 45. Each of the trailing arms 40 includes one or more ears 48. A link 50 includes two ends 51 to be pivotally secured to the ears 48 with bearings 53. One end 51 of the link 50 may be rotatably attached to the ears 48 of one of the trailing arms 40 with a pivot pin 49, and the other end 51 of the link 50 may be detachably coupled to the ears 48 of the other trailing arm 40 with a latch pin 55 or the like.

In operation, when the vehicle travels a sinusoidal path, and when the operator shifts his or her weight to the inside of each turning arc, to shift the center of mass to the inside of each arc, the front column 2 may thus be tilted relative to the ground, to result a series of accelerations due to the conservation of momentum of the vehicle and operator, and thus to attain a forward motion.

The inclination of the pivot axles 78 relative to the bracket 7 or the front tube 20 may generate different moving stroke of the vehicle as compared with those of the typical cambering vehicles. The inclination of the pivot axles 78 relative to the front tube 20 may also be changed to cause different moving stroke of the vehicle, and thus to change the accelerations of the vehicle. It is preferable, but not necessarily, that the pivot axles 78 are arranged symmetric relative to the front column 2 or relative to the bracket 7.

The bracket 7 and the trailing arms 40 may be rotated relative to the front tube 20 or the front column 2 to a compact folding position (FIG. 8) when the latch pin 24 of the spring-biased latch device 23 is disengaged from the upper panel 72 of the bracket 7, and fixable to the front tube 20 at a working position (FIG. 7) when the latch pin 24 of the spring-biased latch device 23 is engaged into the orifice 73 of the upper panel 72 of the bracket 7.

Due to the inclination of the pivot axles 78 relative to the bracket 7 or the front tube 20, the trailing arms 40 may be rotated and spaced away from each other when the link 50 is disengaged from the trailing arms 40. The folding of the trailing arms 40 toward the front column 2 with the bracket 7 allows the cambering vehicle to be folded to a compact folding or storing position.

## Claims

1. A cambering vehicle comprising a front column (2), a left and a right trailing arms (40) including a front portion for pivotally attaching to the front column (2) with a first and a second pivot axles (78), a rear wheel (45) attached a rear portion, and a foot pedal (46) disposed thereon, **characterized in that**:
the first and the second pivot axles (78) are inclined relative to the front column (2).

2. A vehicle as claimed in claim 1, wherein the front column (2) includes a front tube (20), a steering shaft (30) rotatably disposed in the front tube (20), a front wheel (32) provided on bottom of the shaft (30), and a handle (34) provided on top of the shaft (30).

3. A vehicle as claimed in claim 1 further comprising means (47) for braking the rear wheels (45).

4. A vehicle as claimed in claim 1 further comprising means (50) for coupling the left and the right trailing arms (40) together.

5. A vehicle as claimed in claim 1 further comprising a bracket (7) rotatably attached to the front column (2), the front portions of the left and the right trailing arms (40) are pivotally attached to the bracket (7) with the pivot axles (78).

6. A vehicle as claimed in claim 5, wherein the bracket (7) includes two socket openings (74) to rotatably receive the pivot axles (78) respectively.

7. A vehicle as claimed in claim 6, wherein the bracket (7) includes two frames (75) to form the socket openings (74).

8. A vehicle as claimed in claim 5 further comprising a latch device (23) to detachably latch the bracket (7) to the front column (2).

9. A vehicle as claimed in claim 8, wherein the front column (2) includes an extension (21), the latch device (23) includes a latch pin (24) extended through the extension (21) of the front column (2).

10. A vehicle as claimed in claim 8, wherein the bracket (7) includes a panel (72) having an orifice (73) to receive the latch pin (24) of the latch device (23).
